# EUROPÄISCHE PATENTANMELDUNG

(11) **EP 1 557 450 A1**
(43) Veröffentlichungstag der Anmeldung: **27.07.2005**
(21) Anmeldenummer: 04405773.5
(22) Anmeldetag: 16.12.2004
(51) Int. Cl.: C09J 7/02

(54) **Klebeband**

(30) Priorität: 19.01.2004 CH 692004
(71) Anmelder: Ampack AG, 9404 Rorschacherberg (CH)
(72) Erfinder: Deschwanden, Andreas B., 9404 Rorschacherberg (CH); Höing, Ulrich, 9244 Niederuzwill (CH)
(74) Vertreter: Clerc, Natalia

(57) **Zusammenfassung**

Ein Klebeband weist eine Trägerbahn (1), welche mindestens auf einer Seite mit einer Klebstoffschicht (2) versehen ist, und mindestens eine die Klebstoffschicht (2) überdeckende Schutzbahn (3) auf. Die Trägerbahn (1) besteht aus einem Material, welches in einer ersten Richtung bevorzugter reisst als in einer zweiten Richtung. Die Trägerbahn (1) und die Schutzbahn (3) weisen Längskanten (L) auf, welche mindestens abschnittsweise sägezahnförmig ausgebildet sind, wobei diese erste Richtung mindestens annähernd senkrecht zur sägezahnförmigen Längskante (L) verläuft.

## Beschreibung

### Technisches Gebiet

Die Erfindung betrifft ein Klebeband gemäss Oberbegriff des Patentanspruchs 1.

### Stand der Technik

Zur Überbrückung eines Spalts zwischen zwei Bauteilen oder zwei Baumaterialien oder zur Verklebung von bahnenartigen Baustoffen werden üblicherweise selbstklebende Bänder verwendet. Diese Klebebänder weisen eine Trägerbahn, eine auf einer oder beiden Seiten der Trägerbahn aufgebrachte Klebstoffschicht und mindestens eine die Klebstoffschicht überdeckende und leicht von ihr lösbare Schutzbahn auf.

Derartige Klebebänder sind üblicherweise auf Rollen aufgerollt, wobei bei Gebrauch eine gewünschte Länge des Klebebandes abgerollt und abgeschnitten wird. Ein einfaches Abreissen von Hand ohne vorheriges Anschneiden der Träger- und der Schutzbahn ist oft nicht möglich.

Ein weiterer Nachteil entsteht dadurch, dass sich der Klebstoff üblicherweise bis an den Längsrand der Trägerbahn erstreckt. Durch die beim Aufrollen des Bandes vorhandenen Drücke und Spannungen wird der Klebstoff nach aussen gepresst, so dass die Stirnflächen der Klebebandrolle kleben. Dadurch verschmutzen sie schneller. Rollen, welche längere Zeit auf Tischplatten oder anderen Auflageflächen liegen, kleben an diesen fest. Zudem verkleben die einzelnen Lagen des aufgerollten Klebebandes an ihren Längsrändern, so dass das Band beim Abrollen in unerwünschter Weise, beispielsweise in Längsrichtung, zerreissen kann.

Im Stand der Technik sind ferner Folien bekannt, welche in einer ersten Richtung eine erhöhte Dehnbarkeit aufweisen und in einer zweiten Richtung relativ leicht zerreissbar sind. Diese sogenannten Stretch- oder Cast-Folien werden in den verschiedensten Bereichen eingesetzt, beispielsweise in der Verpackungsindustrie zur Verpackung von Lebensmitteln, im Hygieneartikel-Bereich oder als Klarsichtklebebänder im Bürobereich.

Diese Folien werden extrudiert, beispielsweise im sogenannten Chillroll-Verfahren unter Verwendung einer kalten Walze. Je nach Anwendungsbereich wird eine Oberfläche der Folie aufgerauht bzw. mit einem Prägungsmuster versehen, indem diese kalte Walze als Prägewalze, insbesondere als Moletierwalze, ausgebildet ist.

### Darstellung der Erfindung

Es ist eine Aufgabe der Erfindung, ein Klebeband, insbesondere im Baubereich, zu schaffen, welches im aufgerollten Zustand keine klebende Stirnfläche aufweist und welches sich von Hand auf einfache Weise an einer gewünschten Stelle ablängen lässt.

Diese Aufgabe löst ein Klebeband mit den Merkmalen des Patentanspruchs 1.

Das erfindungsgemässe Klebeband weist eine Trägerbahn, welche mindestens auf einer Seite mit einer Klebstoffschicht versehen ist, und vorzugsweise mindestens eine die Klebstoffschicht überdeckende Schutzbahn auf. Die Trägerbahn besteht aus einem Material, welches in einer ersten Richtung bevorzugter reisst als in einer zweiten Richtung, insbesondere besteht die Trägerbahn aus einer Stretch- oder Cast-Folie. Die Trägerbahn weist ferner mindestens eine Längskante auf, welche in ihrer Längsrichtung unterbrochen ist, wobei die Unterbrechungen sich mindestens annähernd in Richtung der ersten Richtung erstrecken. Diese erste Richtung verläuft vorzugsweise mindestens annähernd senkrecht zur Längskante.

Vorzugsweise ist die Längskante sägezahnförmig ausgebildet. Sie kann jedoch beispielsweise auch wellenförmig ausgebildet sein oder lediglich über ihre Länge verteilte Einschnitte aufweisen.

Vorzugsweise sind beide Längskanten der Trägerbahn und die Längskanten der mindestens einen Schutzbahn mit Unterbrechungen, insbesondere mit einem Sägezahnschnitt versehen, wobei übereinanderliegende Unterbrechungen der Trägerbahn und der Schutzbahn deckungsgleich sind.

Die Kombination einer in einer Richtung leichter reissbaren Trägerbahn mit den unterbrochenen Längskanten weist mehrere Vorteile auf. Zum einen ist die Reissbarkeit quer zur Längskante erhöht und die Unterbrechungen bilden eine erste Zerreisshilfe, so dass das Band ohne Hilfsmittel wie Schere oder Messer an jeder beliebigen gewünschten Stelle abgelängt werden kann. Zum anderen hat sich gezeigt, dass insbesondere sägezahnförmige und wellenförmige Längskanten, obwohl sie eine grössere Oberfläche aufweisen als eine gerade Längskante, dazu führen, dass die Stirnflächen von Klebebandrollen weniger schnell verschmutzen und auch weniger stark verkleben. Der Sägezahn- oder Wellenschnitt scheint beim Aufrollen des Klebebandes zu einer Rolle bzw. beim Schneiden des Bandes in seine Sägezähnform den Klebstoff von der Längskante zum mittleren Bereich der Trägerbahn hin zu drücken.

Ist die Trägerbahn geprägt bzw. aufgerauht, ist das Klebeband griffig und lässt sich beim Ablängen besser in den Händen halten. Die Aufrauhung lässt sich bei Verwendung von Cast-Folien auf einfache Art und Weise beim Extrudieren der Folie herstellen, indem diese durch Prägewalzen getrieben wird. Da kein zusätzlicher Herstellungsschritt notwendig ist, lassen sich die Herstellungskosten minimieren.

Die Trägerbahn kann transparent oder transluzent ausgebildet sein. Sie kann auch mit Montagehilfen zur Positionierung des Klebebandes, wie beispielsweise einer Mittellinie, und/oder mit anderen Markierungen bzw. Firmenlogos und Typenbezeichnungen versehen sein. Diese Markierungen können Farbaufdrucke oder weitere Prägungen sein.

Weitere vorteilhafte Ausführungsformen gehen aus den abhängigen Patentansprüchen hervor.

### Kurze Beschreibung der Zeichnung

Im folgenden wird der Erfindungsgegenstand anhand eines bevorzugten Ausführungsbeispiels, welches in den beiliegenden Zeichnungen dargestellt ist, erläutert. Es zeigen:
Figur 1 eine Ansicht eines erfindungsgemässen Klebebandes von oben und
Figur 2eine perspektivische Ansicht des Klebebandes gemäss Figur 1.

### Wege zur Ausführung der Erfindung

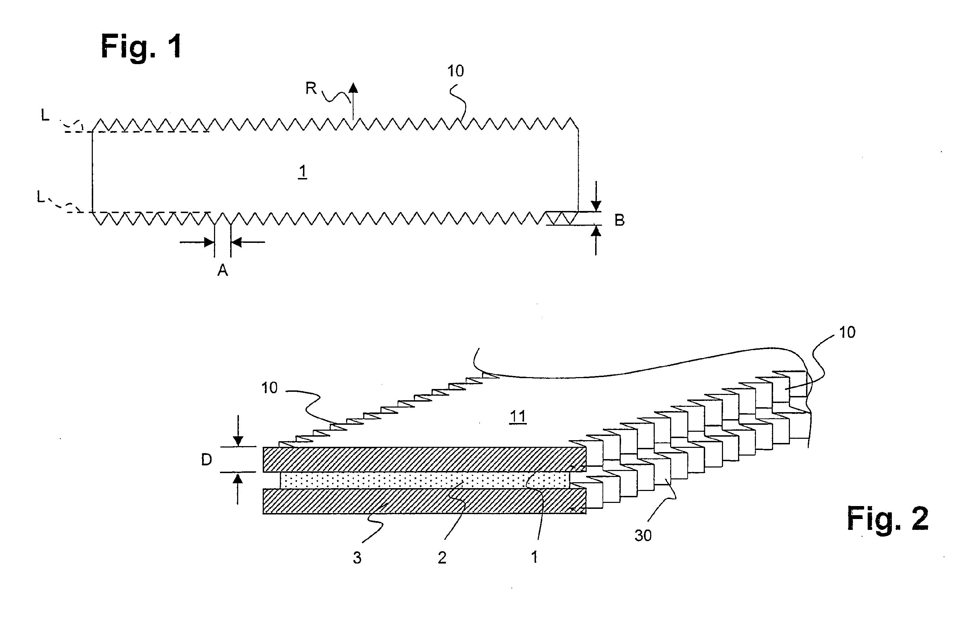

Das erfindungsgemässe Klebeband gemäss den Figuren 1 und 2 eignet sich vor allem für den Einsatz im Baubereich, insbesondere um Spalten zwischen zwei Bauteilen oder zwei Baumaterialien zu überbrücken beziehungsweise um zwei bahnenartige Baustoffe miteinander zu verkleben.

Es weist eine Trägerbahn 1 auf, auf welcher mindestens auf einer Seite eine Klebstoffschicht 2 aufgebracht ist. Die Klebstoffschicht 2 ist von einer Schutzbahn 3 überdeckt. Die Schutzbahn 3 lässt sich einfach von der Klebstoffschicht 3 entfernen, ohne dass Klebstoff auf ihr kleben bleibt.

Die Trägerbahn 1 kann auch auf beiden Seiten mit einer Klebstoffschicht 2 versehen sein, wobei in diesem Fall auf beiden Seiten je eine Schutzbahn 3 vorhanden ist. Zudem kann die Schutzbahn 3 zwei- oder mehrgeteilt sein und in Form von parallel verlaufenden Linern die Klebstoffschicht 2 überdecken.

Als Klebstoffschicht 2 und als Schutzbahn 3 eignen sich die bekannten, üblicherweise bei Klebebänder eingesetzten Materialien.

Die Trägerbahn 1 ist aus einem Material hergestellt, welches in einer ersten Richtung, nämlich zu einer möglichst annähernd senkrecht zur Längskante, jedoch in der Ebene der Trägerbahn 1 verlaufenden Richtung R bevorzugter reisst als in einer zweiten Richtung, welche üblicherweise senkrecht dazu verläuft. In der Richtung R ist die Reissfestigkeit des Materials am geringsten. Als Material eignet sich insbesondere eine Cast- oder Stretchfolie. Sie weist üblicherweise eine Dicke D von 0.020 mm bis 0.200 mm auf. Vorzugsweise beträgt sie circa 0.08 mm.

Vorzugsweise ist die Trägerbahn 1 mindestens auf ihrer der Klebstoffschicht 2 abgewandten Oberfläche 11 aufgerauht, insbesondere geprägt. Diese Prägung lässt sich im Falle der Cast-Folie bei der Herstellung der Folie mittels einer geprägten Extrudierwalze herstellen. Diese Oberfläche 11 kann zusätzlich mit Beschriftungen oder Montagehilfen in Form von Markierungen versehen sein.

Die Trägerbahn 1 ist ferner an mindestens einer ihrer Längskanten L, vorzugsweise an beiden Längskanten L sägezahnförmig ausgebildet. Auch die Schutzbahn 3 weist sägezahnförmige Längskanten auf. Die Sägezähne 10 der Trägerbahn 1 und die Sägezähne 30 der Schutzbahn 3 sind vorzugsweise deckungsgleich. Jeder Sägezahn 10, 30 kann spiegelsymmetrisch ausgebildet sein. Es ist jedoch auch möglich, Sägezähne mit einer längeren und einer kürzeren Seite zu versehen oder die Spitzen abzurunden. Die Herstellung der sägezahnförmigen Längskanten ist relativ einfach. Nach dem Extrudieren der Trägerbahn, dem Aufbringen der Klebstoffschicht 2 und der Abdeckung mit der Schutzbahn lassen sich die Längskanten L mit entsprechend geformten Messern in das gewünschte Zick-Zack-Muster schneiden.

Vorzugsweise weisen die Sägezähne 10, 30 eine Höhe B von circa 1mm auf und der Abstand A zwischen zwei Spitzen der Sägezähne 10, 30 beträgt vorzugsweise circa 2 mm.

In den Figuren sind somit die Sägezähne wie auch die Dicken der einzelnen Lagen 1, 2, 3 zur besseren Erkennung überdimensional gross dargestellt. Wie jedoch in Figur 2 erkennbar ist, erstreckt sich die Klebstoffschicht 2 vorzugsweise über die gesamte Breite der Trägerbahn 1. Obwohl sie bei der Herstellung des Klebebandes auf die gesamte Breite der Trägerbahn 1 aufgetragen wurde, erstreckt sie sich nach dem Sägezahnschnitt nicht mehr unbedingt oder zumindest nicht mehr mit ihrer übrigen gesamten Dicke bis zu den äusseren Spitzen der Längskanten L. Dies ist in Figur 2 lediglich schematisch dargestellt.

Das erfindungsgemässe Klebeband lässt sich ohne fremde Hilfsmittel ablängen. Ferner verschmutzen die Stirnflächen der Rollen derartiger Klebebänder kaum.

## Patentansprüche

1. Klebeband mit einer Trägerbahn (1), welche mindestens auf einer Seite mit einer Klebstoffschicht (2) versehen ist, **dadurch gekennzeichnet, dass** die Trägerbahn (1) aus einem Material besteht, welches in einer ersten Richtung bevorzugter reisst als in einer zweiten Richtung, und dass die Trägerbahn (1) mindestens eine Längskante (L) aufweist, welche mindestens abschnittsweise mit Unterbrechungen versehen ist, welche sich mindestens annähernd in dieser ersten Richtung erstrecken.

2. Klebeband nach Anspruch 1, wobei die Längskante (L) mindestens abschnittsweise sägezahnförmig ausgebildet ist und wobei die erste Richtung mindestens annähernd zur sägezahnförmigen Längskante verläuft.

3. Klebeband nach einem der Ansprüche 1 oder 2, wobei beide Längskanten (L) der Trägerbahn (1) sägezahnförmig ausgebildet sind.

4. Klebeband nach einem der Ansprüche 1 bis 3, wobei mindestens eine die Klebstoffschicht (2) überdeckende Schutzbahn (3) vorhanden ist und wobei die mindestens eine Schutzbahn (3) mindestens eine Längskante mit Unterbrechungen aufweist, welche sich mindestens annähernd in dieser ersten Richtung erstrecken, wobei die Längskante insbesondere sägezahnförmig ausgebildet ist.

5. Klebeband nach Anspruch 4, wobei die Unterbrechungen der Trägerbahn (1) und der Schutzbahn (3) deckungsgleich sind.

6. Klebeband nach einem der Ansprüche 1 bis 5, wobei die Trägerbahn (1) beidseitig mit der Klebstoffschicht (2) versehen ist.

7. Klebeband nach einem der Ansprüche 2 oder 4, wobei die sägezalmförmige Längskante Spitzen mit einer Höhe (B) von mindestens annähernd 1.mm aufweist, wobei benachbarte Spitzen einen Abstand (A) von circa 2 mm aufweisen.

8. Klebeband nach einem der Ansprüche 1 bis 8, wobei die Trägerbahn (1) eine Dicke von 0.020 mm bis 0.200 mm, vorzugsweise von mindestens annähernd 0.08 mm aufweist.

9. Klebeband nach einem der Ansprüche 1 bis 8, wobei die Trägerbahn (1) mindestens auf der der Klebstoffschicht (2) abgewandten Oberfläche (11) aufgerauht ist.

10. Klebeband nach einem der Ansprüche 1 bis 9, wobei die Trägerbahn (1) zur Positionierung oder Kennzeichnung auf einer der Klebstoffschicht (2) abgewandten Oberfläche (11) mit Markierungen versehen ist.
